# EUROPÄISCHE PATENTSCHRIFT

(11) **EP 1 627 160 B1**
(45) Veröffentlichungstag und Bekanntmachung des Hinweises auf die Patenterteilung: **23.07.2008**
(21) Anmeldenummer: 04733556.7
(22) Anmeldetag: 18.05.2004
(51) Int. Cl.: F16D 55/32, F16D 65/14

(54) **PNEUMATISCH ODER ELEKTROMOTORISCH BETÄTIGBARE SCHEIBENBREMSE**
PNEUMATICALLY OR ELECTROMOTIVELY OPERABLE DISC BRAKE
FREIN A DISQUE A ACTIONNEMENT PAR VOIE PNEUMATIQUE OU PAR MOTEUR ELECTRIQUE

(30) Priorität: 19.05.2003 DE 10322834
(43) Veröffentlichungstag der Anmeldung: 22.02.2006
(73) Patentinhaber: KNORR-BREMSE SYSTEME FÜR NUTZFAHRZEUGE GMBH, 80809 München (DE)
(72) Erfinder: FISCHER, Rudolf, 85435 Erding (DE); KNOOP, Dietmar, 82067 Ebenhausen (DE)
(74) Vertreter: Mattusch, Gundula
(86) Internationale Anmeldenummer: PCT/EP2004/005326
(87) Internationale Veröffentlichungsnummer: WO 2004/102024

(56) Entgegenhaltungen:
- DE-A- 10 253 642
- DE-U- 9 422 342
- US-A- 3 878 923
- US-A- 4 056 173

## Beschreibung

Die vorliegende Erfindung betrifft eine pneumatisch oder elektromotorisch betätigbare Scheibenbremse, mit einem eine Bremsscheibe übergreifenden Bremssattel, mindestens einer Zuspanneinrichtung zum Zuspannen der Scheibenbremse mittels eines verschiebbar geführten Elements, insbesondere einer Traverse, wobei das verschiebbar geführte Element mindestens eine Gewindebohrung aufweist, in die eine Stellspindel eingeschraubt ist, die ein Druckstück trägt, mit welchem ein Bremsbelag gegen die Bremsscheibe drückbar ist, einer mit der Stellspindel in Wirkverbindung stehenden Nachstelleinrichtung zur Nachstellung des Lüftspiels, und einem bis zu einem bestimmten Drehmoment verdrehhindernd auf die Stellspindel wirkenden Sicherungselement.

Bei einer derartigen Schreibenbremse, wie sie beispielsweise aus der DE 94 22 342 U1 bekannt ist, wirkt ein Drehhebel auf eine Traverse ein, in der vorzugsweise zwei Stellspindeln gelagert sind, die jeweils ein Druckstück zur Aufnahme eines Bremsbelages aufweisen, das bei Bremsungen an eine Bremsscheibe angedrückt wird. Die beiden Stellspindeln sind mit einem Außengewinde versehen und jeweils in eine Gewindebohrung der Traverse eingeschraubt.

Mittels einer Nachstelleinrichtung, die einer der Stellspindeln zugeordnet ist, und einem Mitnehmer der anderen Stellspindel wird durch Verdrehen der Stellspindeln in den Gewindebohrungen bei Verschleiß des Bremsbelages die Bremsbacke so weit zugestellt, dass ein Lüftspiel zwischen dem Bremsbelag und der Bremsscheibe im wesentlichen immer konstant bleibt.

Um zu verhindern, dass durch Erschütterungen während des Fahrbetriebs die Stellspindeln ungewollt ihre Lage - und somit den Abstand zwischen dem Bremsbelag und der Scheibenbremse, also das Lüftspiel - verändern, werden Sicherungselemente eingesetzt, die drehhemmend auf die Stellspindeln einwirken, so dass die genannte unbeabsichtigte Verstellung verhindert wird. Dabei liegen die Sicherungselemente reibend an der Stellspindel oder Teilen davon an. Die Reibkraft ist so bemessen, dass bei einem durch die Nachstelleinrichtung aufzubringenden bestimmten Drehmoment die Drehung der Stellspindeln problemlos möglich ist, wobei dieses Drehmoment größer ist als ein solches, wie es sich aus den Erschütterungskräften im Fahrbetrieb ergeben kann.

Ähnliche Probleme treten bei rein statischem Takten durch ein Taumeln des Nachstellerantriebs gegenüber den Nachstellgliedern (Gewinderohren bzw., Stellspindeln auf), speziell, wenn es zu einem Mittenversatz kommt, wodurch ein Drehimpuls ausgeübt wird, dem eine Bremswirkung am Gewinderohr entgegenstehen muss.

Um diesen Effekten entgegen zu wirken, müssen die Gewinderohre daher mit einem recht genau einstellbaren und auch über der Zeit und der Belastung weitestgehend konstant einstellbaren Reibmoment versehen sein. Genau dies ist beim Stand der Technik nur eingeschränkt möglich.

So besteht ein bekanntes Sicherungselement aus einer (Sekundär-)Dichtung, die in einem dem Druckstück zugewandten Endbereich der Stellspindel angeordnet ist und sichernd in die Stellspindeln eingreift.

Unter anderem zur Funktion der Drehhemmung besteht die Sekundärdichtung bzw. das in die Stellspindel greifende Teil aus einem Elastomer wie Silikonkautschuk, das in die Sekundärdichtung integriert ist.

Insbesondere bei schwerem Einsatz erreichen die Stellspindeln Temperaturen, denen das aus Kunststoff bestehende Sicherungselement dauerhaft nicht standhalten kann.

Auch eine Versprödung und Alterung des Materials sowie Reaktionen auf eine unvermeidliche Fetteinwirkung begrenzen die Lebensdauer, so dass ein verschleißbedingtes Auswechseln in wirtschaftlich wenig sinnvollen Intervallen notwendig wird.

Zwar sind Lösungen bekannt, bei denen in die Traverse eingesetzte metallische Ringe oder Zungen in Eingriff mit den Stellspindeln kommen, jedoch ist diese Konstruktion i.allg. nur unter einer besonderen mechanischen Bearbeitung der Traverse realisierbar, was naturgemäß eine Erhöhung der Fertigungskosten zur Folge hat.

Der vorliegenden Erfindung liegt daher die Aufgabe zugrunde, eine Scheibenbremse der gattungsgemäßen Art so weiter zu entwickeln, dass mit konstruktiv einfachen Mitteln eine hohe Standzeit der eingesetzten Sicherungselemente erreicht wird, wobei auch eine möglichst präzise und über die Betriebszeit konstante Festlegung des Grenzdrehmomentes, bis zu welchem die Sicherungselemente ungewollte Drehungen des Stellspindeln verhindern, realisierbar sein soll.

Diese Aufgabe wird durch eine Scheibenbremse mit den Merkmalen des Anspruchs 1 gelöst.

Danach ist das Sicherungselement als Federring mit wenigstens einem oder mehreren von über den Umfang verteilten Federbügeln ausgebildet, die außerhalb des Innengewindes des verschiebbar geführten Elements - insbesondere der Traverse - reibend an der Stellspindel anliegen.

Ein besonderer Vorteil besteht in der genauen Bestimmbarkeit des zudem dauerhaft sehr konstanten Grenzdrehmomentes, bis zu welchem Drehungen der Stellpindel(n) verhindert werden.

Durch die gewählte konstruktive Ausbildung ergeben sich ferner eine ganze Reihe von Vorteilen sowohl hinsichtlich des Betriebs der Scheibenbremse wie auch hinsichtlich der Herstellung der Sicherungselemente und hinsichtlich deren Montage.

Insbesondere ist auch die leichte Nachrüstbarkeit bei bestehenden Scheibenbremsen zu nennen.

Zur Bestimmung des Grenzdrehmomentes, bis zu welchem Drehungen der Stellpindel(n) verhindert werden, bietet es sich insbesondere an, die Art und die Anzahl der Federbügel zu variieren. Bevorzugt ist wenigstens ein Federbügel vorgesehen. Noch vorteilhafter ist aber eine Anordnung mit drei oder mehr, insbesondere fünf oder sechs Federbügeln, da diese einerseits noch gut am Ringelement angeordnet sein können und andererseits von mehreren Stellen her eine gleichmäßige Krafteinwirkung auf die Stellpindel(n) sichern.

Neben der hinsichtlich ihrer Dimensionierung wählbaren Reibfläche ist auch durch die Bestimmung der Federkraft die Drehhemmung bestimmbar, wobei sich die Federkraft ergibt aus der Rückstellkraft der einzelnen Federbügel und deren Anzahl.

Der Federring, vorzugsweise aus einem Federstahl bestehend, kann aus einem einfachen, streifenförmigen Stanzteil hergestellt werden, das durch Biegen zu einem kreisrunden Ring mit geringem Aufwand zu formen ist. Dabei sind die beiden Enden vorzugsweise so (z.B. schlossartig) ausgebildet, dass sie zusammengesteckt formschlüssig ineinander greifen.

Eine Bearbeitung der Traverse ist ebenfalls nicht erforderlich, da der Federring außerhalb des Innengewindes der Traverse im Bereich der Sekundärdichtung, also auf der dem Druckstück zugewandten Seite, angeordnet ist und dort mit seinen Federbügeln, die vorzugsweise als Federarme ausgebildet sind, an der Stellspindel reibend anliegt.

In idealer Weise kann so der vorhandene Einbauraum zum Einsatz des Federringes genutzt werden, wobei als besonderer Vorteil hervorzuheben ist, dass der Federring auch in bestehende, also in Betrieb befindliche Scheibenbremsen, beispielsweise als Ersatzbeschaffung problemlos einbaubar ist. Hierbei können die vorhandenen Montagewerkzeuge für die Nachrüstung oder einen Austausch eingesetzt werden. Die einfache Montage mit der gleichermaßen problemlosen Anbindung an die Bremse führt ebenso zu einer Kostenminimierung wie die Herstellbarkeit unter Nutzung bekannter Technologien.

Der, wie erwähnt, vorzugsweise metallische Federring ist gegenüber einem solchen aus einem Kunststoff hoch temperaturbelastbar, so dass die auftretenden Betriebstemperaturen keine Auswirkungen auf die Standzeit dieses Bauteiles haben. Dazu trägt auch bei, dass ein solcher Federring mechanisch äußerst robust ist, d. h., den auftretenden Beanspruchungen gegenüber unempfindlich, wodurch eine hohe Lebensdauer erreicht wird. Dabei bietet es sich an, den Federring aus rostfreiem Federstahl zu fertigen.

Es ist auch denkbar, den Federring mit einer Dichtung integriert auszugestalten, Dabei bietet es sich wiederum an, den Federring ganz oder teilweise zu umspritzen und/oder zu umschäumen. Die Federbügel werden dabei bevorzugt vom Umschäumen ausgespart. Derart kann auf einfache Weise beispielsweise eine Sekundärdichtung z.B. in Ergänzung eines Faltenbalges als Primärdichtung hergestellt werden, welche das innere des Bremssattels gegen ein Eindringen von Feuchtigkeit schützt.

Die Federarme können unterschiedlich geformt sein, beispielsweise in ihrem freien Endbereich U-förmig, wobei die offene Seite nach außen, also von der Stellspindel fort weist. Eine solche Formgebung bietet besondere Vorteile bei der Montage, d. h., beim Aufschieben des Federringes auf die Stellspindel (Nachmarkt), bzw. bei der Montage der Gewindespindel am Band, wenn sich der Federring bereits auf der Traverse befindet (Erstausrüstung).

Die Breite der Federbügel, insbesondere im Bereich der Anlage an der Stellspindel, ist so bemessen, dass die Federbügel an mehreren Spitzen der Gewindegänge anliegen.

Alternativ zu einem geschlitzten Ring, der sehr leicht zu fertigen ist, kann der Federring prinzipiell auch geschlossen ausgebildet werden.

Zusammenfassend ergeben sich folgende Vorteile durch den Gegenstand des Anspruchs 1, insbesondere in Kombination mit einem oder mehreren Unteransprüchen:
- hochtemperaturbelastbar,
- mechanisch robust,
- elastisch verformbar,
- lebensdauertauglich,
- nicht rostend,
- in vorhandenem Einbauraum einsetzbar,
- mit Kunststoff umspritzbar,
- nachrüstbar,
- austauschbar,
- günstig herstellbar,
- einfach anzubinden an die Bremse,
- einfach montierbar in der Serie und im Feld bei einem Austausch oder einer Nachrüstung.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben. Es zeigen:
- Figur 1: eine erfindungsgemäße Scheibenbremse in einer teilweise geschnittenen Draufsicht,
- Figur 2: einen Teilausschnitt der Scheibenbremse in einer geschnittenen Draufsicht,
- Figur 3: einen Federring der Scheibenbremse in einer Draufsicht,
- Figur 4: einen Schnitt durch den Federring in einer Seitenansicht,
- Figur 5: einen Stanzling vor einer Verformung zu einem Federring in einer Seitenansicht,
- Figur 6: einen umspritzten Federring,
- Figur 7: ein weiteres Ausführungsbeispiel eines Stanzlings vor einer Verformung zu einem Federring in einer Seitenansicht,
- Figur 8: einen Teilausschnitt des zu einem Federring geformten Stanzlings nach Figur 7 in einer Draufsicht.

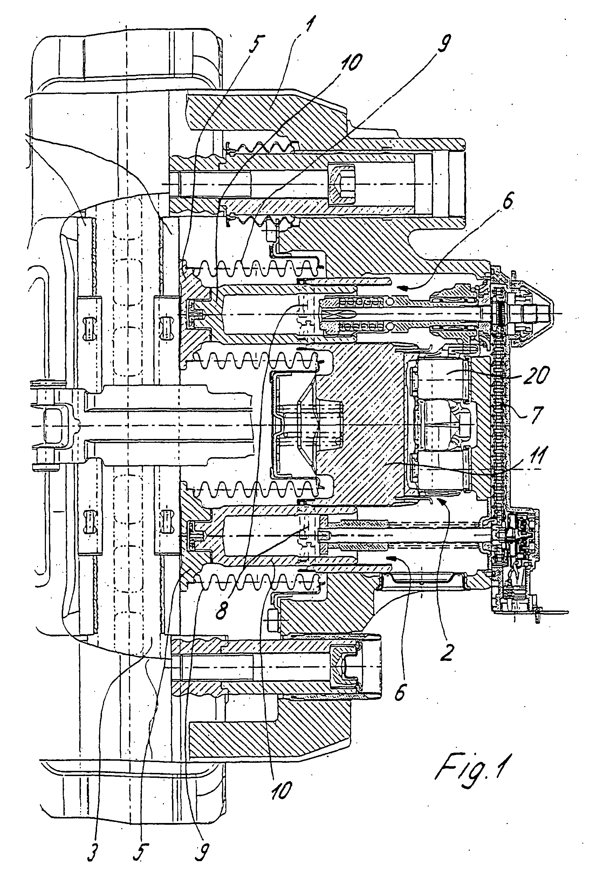

In der Figur 1 ist eine pneumatisch betätigbare Scheibenbremse dargestellt, die einen als Schiebesattel ausgebildeten Bremssattel 1 aufweist, der eine Bremsscheibe 3 in ihrem oberen Umfangsbereich umfasst.

Prinzipiell ist auch eine elektromotorische Betätigung der Scheibenbremse möglich. Die Erfindung eignet sich ferner prinzipiell auch für Scheibenbremsen mit Fest- oder Schwenksätteln.

Beidseits der Bremsscheibe 3 sind Bremsbeläge 4 angeordnet. Zur Betätigung der Scheibenbremse mittels eines Zuspannens der Bremsbeläge dient dabei eine Zuspannvorrichtung 2, deren genaue Funktion näher in der DE 94 22 342 beschrieben ist.

Die Zuspannvorrichtung weist einen Drehhebel auf, welcher direkt oder über ein Zwischenelement wie ein Drehlager auf eine Traverse 11 einwirkt, welche mit Gewindebohrungen versehen ist, in welche Stellspindeln 10 eingeschraubt sind.

Zur Einstellung des durch Bremsungen vergrößerten Lüftspiels ist einer der Stellspindeln eine Nachstelleinrichtung 6 zugeordnet, mit der das infolge eines Belagverschleißes ändernde Lüftspiel durch Drehung der Stellspindel 10 nachgestellt wird. Die zweite Stellpindel 10 wird durch eine Synchronisationseinrichtung - hier eine Kette 7 - mitgenommen.

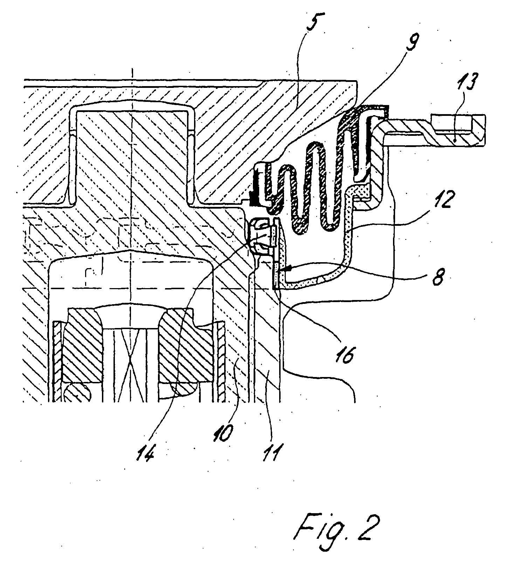

Um zu verhindern, dass sich während des Fahrbetriebs, beispielsweise durch Erschütterung, die Stellspindeln 10 unbeabsichtigt verdrehen und somit das Lüftspiel entsprechend in unerwünschter Weise verändert wird, ist jeder Stellspindel 10 ein Sicherungselement in Form eines Federringes 8 zugeordnet, das eine Mehrzahl von über den Umfang verteilte Federbügel 14 aufweist, die außerhalb des Innengewindes der Traverse 11 reibend an der Stellspindel 10 anliegen. Dies ist besonders deutlich in der Figur 2 erkennbar. Die Federbügel 14 sind axial an den Federring über Stege 21 angeformt bzw. mit diesen verbunden und stehen nach innen hin vom Federring 8 vor.

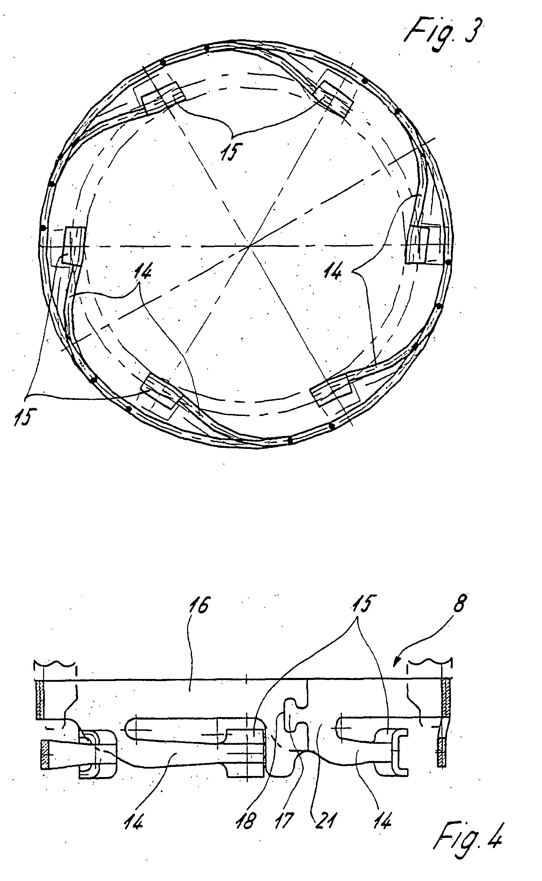

In diesem Beispiel ist der Federring 8 an eine elastische Sekundärdichtung 12 angeschlossen, die ebenso wie ein Faltenbalg 9, der mit dem Druckstück 5 verbunden ist, an einer Verschlußplatte 13 befestigt ist, mit welcher der Innenraum des Bremssattels 1 verschlossen ist. Weiter ist zu erkennen, dass der Federring 8 mit einem geschlossenen Ringbereich 16 außenseitig an der Traverse 11 anliegt, während die Federbügel 14 in Form von Federarmen die Traverse 11 endseitig radial überragen und, wie erwähnt, an der Stellspindel 10 mit Anlageflächen 15 (Figur 4) anliegen.

Vorzugsweise sind fünf oder sechs Federbügel 14 gleichmäßig am Umfang des Ringbereiches 16 verteilt.

Jede Anlagefläche 15 wird durch den Rücken einer U-Form gebildet, deren dem Ringbereich 16 zugewandter Schenkel 24 einen Anschlag beim Aufschieben des Federringes 8 auf die Traverse bildet.

Überdies können durch die genannten Schenkel 24 die Federbügel 14 unter deren Aufspreizung sehr leicht von beiden Enden her auf die Stellspindel 10 aufgleiten werden, wodurch sich eine einfache Montage und eine einfache Wartung ergeben.

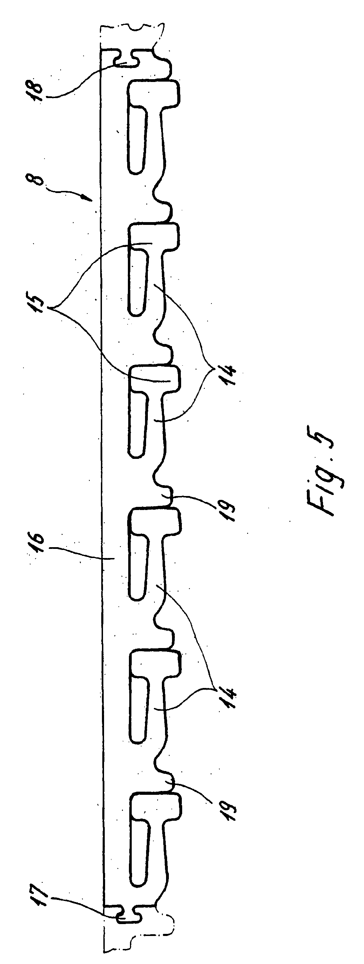

Wie die Figur 5 sehr deutlich zeigt, kann der Federring 8 aus einem streifenförmigen Stanzteil hergestellt werden, das an einem Ende eine Zunge 17 aufweist, während das andere Ende als Aufnahme 18 ausgebildet ist, in welche die Zunge 17 nach Verformung des Streifens zu dem Federring 8 korrespondierend eingreift, so dass ein Formschluß erreicht wird.

Um ein montagebedingtes, unbeabsichtigtes Verbiegen der Federbügel 14 in axialer Richtung des Federringes zu verhindern, sind im Anschlußbereich jedes Federbügels 14 an den Ringbereich 16 axial sich erstreckende Nasen 19 vorgesehen, die den jeweils zugeordneten Federbügel 14 in seiner Höhe überragen, so dass diese Nase 19 praktisch einen Anschlag bildet.

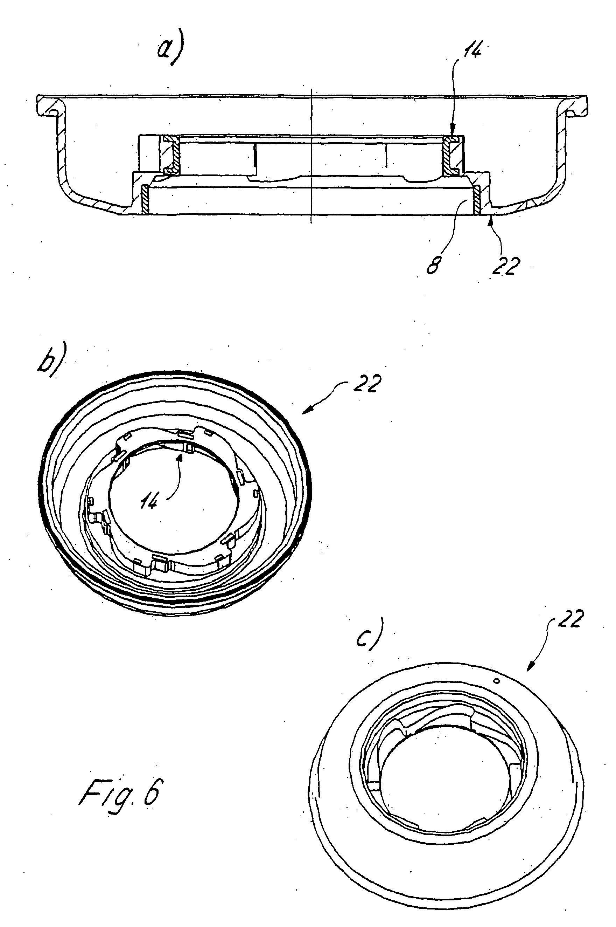

Fig. 6 zeigt eine Variante, bei welcher der Federring 8 teilweise - bevorzugt bis auf die Federbügel 14 - umspritzt ausgebildet ist, so dass der Federring 8 mit einer Art Dichtringabschnitt 22 kombinierbar ist, was auf einfache Weise das Innere des Bremssattels gegen ein Eindringen von Feuchtigkeit schützt und insbesondere im Bereich des Nachrüstens bestehender Konstruktionen bei der Wartung sinnvoll ist.

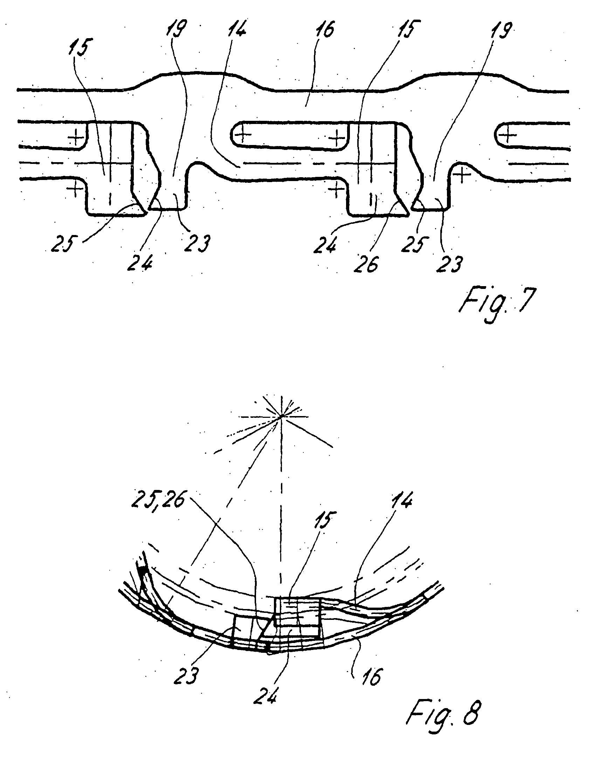

Um zu verhindern, dass sich die als Schüttgut zu transportierenden Federringe 8 miteinander verhaken und so eine einfache Entnahme erschweren, sind bei dem in den Figuren 7 und 8 dargestellten Ausführungsbeispiel an die Nase 19 einerseits und an einen, und zwar den bezogen auf den Ringbereich 16 unteren, sich an die Anlagefläche anschließenden Schenkel 24 jeweils eine Anschlagschräge 24, 25 angeformt. Dabei ist die Anschlagschräge 25 der Nase 19 an einem sich nach innen erstreckenden, umgeformten Schenkel 23 vorgesehen und liegt in Gebrauchsstellung (Figur 8) an der zugeordneten anderen Anschlagschräge 26 an. Freie, hakenförmige Teile, die sich ineinander verkeilen könnten sind somit nicht vorhanden.

### Bezugszeichenliste

- 1: Bremssattel
- 2: Zuspannvorrichtung
- 3: Bremsscheibe
- 4: Bremsbelag
- 5: Druckstück
- 6: Nachstelleinrichtung
- 7: Synchronisationseinrichtung
- 8: Federring
- 9: Faltenbalg
- 10: Stellspindel
- 11: Traverse
- 12: Sekundärdichtung
- 13: Verschlußplatte
- 14: Federbügel
- 15: Anlagefläche
- 16: Ringbereich
- 17: Zunge
- 18: Aufnahme
- 19: Nase
- 20: Drehhebel
- 21: Stege
- 22: Dichtringabschnitt
- 23: Schenkel
- 24: Schenkel
- 25: Anschlagschräge
- 26: Anschlagschräge

## Patentansprüche

1. Pneumatisch oder elektromotorisch betätigbare Scheibenbremse, mit
a) einem eine Bremsscheibe (3) übergreifenden Bremssattel (1),
b) mindestens einer Zuspanneinrichtung (2) zum Zuspannen der Scheibenbremse (3) mittels einer verschiebbar geführten Traverse (11),
c) wobei die verschiebbar geführte Traverse (11) mindestens eine Gewindebohrung aufweist, in die eine Stellspindel (10) eingeschraubt ist, die ein Druckstück (5) trägt, mit welchem ein Bremsbelag (4) gegen die Bremsscheibe (3) drückbar ist,
d) einer mit der Stellspindel (10) in Wirkverbindung stehenden Nachstelleinrichtung (6) zur Nachstellung des Lüftspiels, und
e) einem bis zu einem bestimmten Drehmoment verdrehhindernd auf die Stellspindel (10) wirkenden Sicherungselement,
**dadurch gekennzeichnet,**
f) **daß** das Sicherungselement als ein Federring (8) mit wenigstens einem oder mehreren von über den Umfang verteilten Federbügeln (14) ausgebildet ist, die außerhalb des Innengewindes der verschiebbar geführten Traverse (11) reibend an der Stellspindel (10) anliegen.

2. Scheibenbremse nach Anspruch 1, **dadurch gekennzeichnet, daß** der Federring (8) aus Metall besteht.

3. Scheibenbremse nach Anspruch 2, **dadurch gekennzeichnet, daß** der Federring (8) aus Federstahl besteht.

4. Scheibenbremse nach Anspruch 1, **dadurch gekennzeichnet, daß** der Federring (8) einen umlaufenden, an der Traverse (11) anliegenden, zylinderförmigen Ringbereich (16) aufweist, an den sich die Federbügel (14) anschließen.

5. Scheibenbremse nach Anspruch 1, **dadurch gekennzeichnet, daß** jeder Federbügel (14) eine Anlagefläche (15) aufweist, die an der Stellspindel (10), vorzugsweise an deren Außengewinde anliegt.

6. Scheibenbremse nach Anspruch 5, **dadurch gekennzeichnet, daß** die Anlagefläche (15) in ihrer Breite so bemessen ist, daß sie sich zumindest an zwei einen Gewindegang begrenzenden Gewindespitzen anliegt.

7. Scheibenbremse nach Anspruch 4, **dadurch gekennzeichnet, daß** jeder Federbügel (14) als ein mit dem Ringbereich (16) verbundener Federarm ausgebildet ist.

8. Scheibenbremse nach Anspruch 4, **dadurch gekennzeichnet, daß** an den Ringbereich (16) drei bis sechs der Federbügel (14) angeformt sind.

9. Scheibenbremse nach Anspruch 5, **dadurch gekennzeichnet, daß** die Anlagefläche (15) durch den Rücken einer U-Form gebildet ist, als die der zugeordnete Federbügel (14) in seinem freien Endbereiche ausgebildet ist.

10. Scheibenbremse nach Anspruch 1, **dadurch gekennzeichnet, daß** der Federring (8) mit einer Dichtung (12) integriert ausgestaltet ist.

11. Scheibenbremse nach Anspruch 1, **dadurch gekennzeichnet, daß** der Federring (8) ganz oder teilweise umspritzt und/oder umschäumt ausgebildet ist.

12. Scheibenbremse nach Anspruch 4, **dadurch gekennzeichnet, daß** im Verbindungsbereich jedes Federbügels (14) mit dem Ringbereich (16) eine Nase (19) angeformt ist, die sich entgegengesetzt zum Ringbereich (16) axial erstreckt und den zugeordneten Federbügel (14) überragt.

13. Scheibenbremse nach Anspruch 1, **dadurch gekennzeichnet, daß** der Federring (8) als Stanzteil aus einem Streifen gebildet ist.

14. Scheibenbremse nach Anspruch 13, **dadurch gekennzeichnet, daß** jedes der beiden Enden des Streifens mit Verschlußmitteln versehen ist, die nach Verformung zu einem Federring formschlüssig ineinandergreifen.

15. Scheibenbremse nach Anspruch 14, **dadurch gekennzeichnet, daß** die Verschlussmittel aus einer Zunge (17) und einer Aufnahme (18) bestehen.

16. Scheibenbremse nach Anspruch 12, **dadurch gekennzeichnet, daß** ein sich an die in dem dem Ringbereich (16) abgewandte Seite der Anlagefläche (15) anschließender Schenkel (24) an einem an die Nase (19) angeformten Schenkel (23) anliegt.

17. Scheibenbremse nach Anspruch 16, **dadurch gekennzeichnet, daß** der Schenkel (23) und der Schenkel (24) jeweils eine Anschlagschräge (25, 26) aufweisen, die aneinander liegen.

18. Scheibenbremse nach Anspruch 16 oder 17, **dadurch gekennzeichnet, daß** der Schenkel (23) zur Mitte des Federrings (8) hin gerichtet verläuft.

## Claims

1. Disc brake adapted to be operated pneumatically or by electromotive force, comprising
(a) a brake calliper (1) enclosing a brake disc (3),
(b) at least one brake applicator means (2) for applying the disc brake (3) by means of a cross arm (11) guided for sliding displacement,
(c) wherein said cross arm (11) guided for sliding displacement includes at least one threaded bore into which an adjusting spindle (10) is screwed that carries a pressure element (5) by means of which a brake lining (4) may be pressed against said brake disc (3),
(d) a re-adjusting device (6) for re-adjustment of the venting gap, which is operatively connected to said adjusting spindle (10), and
(e) a locking element acting upon said adjusting spindle (10) so as to prevent twisting up to a defined torque,
**characterised in**
(f) **that** said locking element is configured in the form of a spring lock washer (8) comprising at least one or several resilient yokes (14) distributed along the periphery, which resilient yokes (14) bear against said adjusting spindle (10) in friction contact outside said internal thread of said cross arm (11) guided for sliding displacement.

2. Disc brake according to Claim 1, **characterised in that** said spring lock washer (8) consists of metal.

3. Disc brake according to Claim 2, **characterised in that** said spring lock washer (8) consists of spring steel.

4. Disc brake according to Claim 1, **characterised in that** said spring lock washer (8) comprises a peripheral cylindrically shaped annular zone (16) bearing against said cross arm (11), which is joined by said resilient yokes (14).

5. Disc brake according to Claim 1, **characterised in that** each resilient yoke (14) comprises a bearing surface (15) which bears against said adjusting spindle (10), preferably against the external thread thereof.

6. Disc brake according to Claim 5, **characterised in that** said bearing surface presents a width so dimensioned that it bears against at least two thread crests limiting a thread flight.

7. Disc brake according to Claim 4, **characterised in that** each resilient yoke (14) is configured in the form of a resilient arm connected to said annular zone (16).

8. Disc brake according to Claim 4, **characterised in that** three to six of said resilient yokes (14) are formed on said annular zone (16).

9. Disc brake according to Claim 5, **characterised in that** said bearing surface (15) is formed by the back of a U-shape in which the free terminal zone of the respective associated yoke of said resilient yokes (14) is shaped.

10. Disc brake according to Claim 1, **characterised in that** said spring lock washer (8) is configured to have an integrated seal (12).

11. Disc brake according to Claim 1, **characterised in that** said spring lock washer (8) is configured such that it is completely or partly surrounded by an injected and/or foamed substance.

12. Disc brake according to Claim 4, **characterised in that** a nose (19) is integrally formed in the zone of connection between each resilient yoke (14) and said annular zone (16), which extends axially in a direction opposite to said annular zone (16) and which projects beyond the associated resilient yoke (14).

13. Disc brake according to Claim 1, **characterised in that** said spring lock washer (8) is configured in the form of a punched element in the form of a strip.

14. Disc brake according to Claim 13, **characterised in that** each of the two ends of said strip is provided with closing means engaging in each other in a positive manner after deformation so as to form a spring lock washer.

15. Disc brake according to Claim 14, **characterised in that** said closing means consist of a tongue (17) and a receiving element (18).

16. Disc brake according to Claim 12, **characterised in that** a leg (24) bears against a leg (23) integrally formed on said nose (19), which leg (24) joins said bearing surface (15) on the side turned away from said annular zone (16).

17. Disc brake according to Claim 16, **characterised in that** said leg (23) and said leg (24) present each an inclined stopping surface (25, 26), which stopping surfaces bear against each other.

18. Disc brake according to Claim 16 or 17, **characterised in that** said leg (23) extends along a direction towards the centre of said spring lock washer (8).

## Revendications

1. Frein à disque à actionnement par force pneumatique ou électromotrice, comprenant
(a) un étrier de frein (1) chevauchant un disque de frein (3),
(b) au moins un moyen à serrer le frein (2) afin de serrer le frein à disque (3) moyennant une traverse (11) guidée de façon à achever un déplacement glissant,
(c) dans lequel ladite traverse (11) guidée de façon à achever un déplacement glissant comprend au moins un alésage fileté, dans lequel est vissé une broche de réglage (10), qui porte un élément presseur (5) servant à presser une garniture de frein (4) contre ledit disque de frein (3),
(d) un dispositif de rattrapage (6) pour le rattrapage de la fente d'aération, qui est relié, de façon opérative, à ladite broche de réglage (10), et
(e) un élément d'arrêt, qui agit sur ladite broche de réglage (10) d'une telle manière, qu'il empêche la torsion jusqu'à un niveau de couple de rotation défini,
**caractérisé en ce**
(f) ledit élément d'arrêt est configuré sous forme d'une rondelle élastique (8) comprenant au moins une ou plusieurs brides de ressort (14) distribuées le long de la périphérie, ces brides de ressort (14) portant contre ladite broche de réglage (10) en contact à friction en dehors du filet intérieur de ladite traverse (11) guidée afin d'achever un déplacement glissant.

2. Frein à disque selon la revendication 1, **caractérisé en ce que** ladite rondelle élastique (8) est fait en métal..

3. Frein à disque selon la revendication 2, **caractérisé en ce que** ledit rondelle élastique (8) est fait en acier à ressorts.

4. Frein à disque selon la revendication 1, **caractérisé en ce que** ladite rondelle élastique (8) comprend une zone annulaire périphérique (16) sous forme cylindrique, qui porte contre ladite traverse (11) et à laquelle se joignent lesdits brides de ressort (14).

5. Frein à disque selon la revendication 1, **caractérisé en ce que** chaque bride de ressort (14) comprend une face d'appui (15), qui porte contre ladite broche de réglage (10), de préférence contre le filet extérieur de la dernière.

6. Frein à disque selon la revendication 5, **caractérisé en ce que** ladite face d'appui présente une largeur si dimensionnée, qu'elle porte contre au moins deux sommets du filet, qui limitent un pas de vis.

7. Frein à disque selon la revendication 4, **caractérisé en ce que** chaque bride de ressort (14) est configurée sous forme d'un bras élastique, qui est relié à ladite zone annulaire (16).

8. Frein à disque selon la revendication 4, **caractérisé en ce que** trois à six desdites brides de ressort (14) sont formées à ladite zone annulaire (16).

9. Frein à disque selon la revendication 5, **caractérisé en ce que** ladite face d'appui (15) est formée par le dos d'une forme en U, en laquelle est formée la zone d'extrémité libre de la bride affectée parmi lesdites brides de ressort (14).

10. Frein à disque selon la revendication 1, **caractérisé en ce que** ladite rondelle élastique (8) est configurée d'une manière, qu'il comprend une garniture d'étanchéité intégrée (12).

11. Frein à disque selon la revendication 1, **caractérisé en ce que** ladite rondelle élastique (8) est configurée en une telle forme, qu'elle soit entourée, complètement ou en partie, par une substance injectée et/ou moussée.

12. Frein à disque selon la revendication 4, **caractérisé en ce qu'**un nez (19) est formé, de façon intégrale, dans la zone de connexion reliant chaque bride de ressort (14) et ladite zone annulaire (16), qui s'étend en sens axial en une direction opposée à ladite zone annulaire (16) et qui fait saillie de la bride de ressort (14) affectée.

13. Frein à disque selon la revendication 1, **caractérisé en ce que** ladite rondelle élastique (8) est configurée sous forme d'un élément découpé en bande.

14. Frein à disque selon la revendication 13, **caractérisé en ce que** chacune des deux extrémités de ladite bande est pourvue des moyens de fermeture, qui sont portés en prise l'un dans l'autre de façon positive après leur déformation, afin de constituer une rondelle élastique.

15. Frein à disque selon la revendication 14, **caractérisé en ce que** lesdits moyens de fermeture consistent en une languette (17) et un élément récepteur (18).

16. Frein à disque selon la revendication 12, **caractérisé en ce qu'**un bras (24) porte contre un bras (23) formé, de façon intégrale, audit nez (19), ce bras se joignant à ladite face d'appui (15 du côté opposé à ladite zone annulaire (16).

17. Frein à disque selon la revendication 16, **caractérisé en ce que** ledit bras (23) et ledit bras (24) présentent, chacun, une surface d'arrêt (25, 26) inclinée, auxdites faces d'arrêt portant l'une contre l'autre.

18. Frein à disque selon la revendication 16 ou 17, **caractérisé en ce que** ledit bras (23) s'étend le long d'une direction vers le centre dudit rondelle élastique (8).
